# EUROPEAN PATENT SPECIFICATION

(11) **EP 4 250 938 B1**
(45) Date of publication and mention of the grant of the patent: **11.02.2026**
(21) Application number: 21815699.0
(22) Date of filing: 26.11.2021
(51) Int. Cl.: A23B 5/005, A23B 5/01, A23B 2/53, A23B 5/015, A23B 5/18

(54) **PROCESS AND PLANT FOR THE TREATMENT OF EGGS**
VERFAHREN UND ANLAGE ZUR BEHANDLUNG VON EIERN
PROCÉDÉ ET INSTALLATION POUR LE TRAITEMENT D'OEUFS

(30) Priority: 27.11.2020 IT 202000028769
(43) Date of publication of application: 04.10.2023
(73) Proprietor: Moba Group B.V., 3771 VE Barneveld (NL); Innovo Srl, 31100 Treviso (IT)
(72) Inventor: PESCHI, Leopoldo, 31100 Treviso (IT); GUALTIERI, Fabio, 31100 Treviso (IT); BUISMAN, Paul, 3771 VE Barneveld (NL)
(74) Representative: V.O.
(86) International application number: PCT/IB2021/061002
(87) International publication number: WO 2022/113010

(56) References cited:
- WO-A1-2016/179210
- WO-A1-95/26636
- CN-A- 109 497 127
- GB-A- 2 265 537
- RU-C1- 2 589 226
- US-A- 1 813 064
- GEVEKE D J ET AL: "The Combined Effects of RF Energy and Thermal Energy on Microorganisms", COMPENDEX, ENGINEERING INFORMATION, INC., NEW YORK, NY, US, 1 January 2000 (2000-01-01), XP002803594
- DATABASE COMPENDEX [online] ENGINEERING INFORMATION, INC., NEW YORK, NY, US; 2000, GEVEKE D J ET AL: "The Combined Effects of RF Energy and Thermal Energy on Microorganisms", XP002803594, Database accession no. E2004208166059
- 2000 ASAE ANNUAL INTERNATIONAL MEETING, TECHNICAL PAPERS: ENGINEERING SOLUTIONS FOR A NEW CENTURY - 2000 ASAE ANNUAL INTERNATIONAL MEETING, TECHNICAL PAPERS: ENGINEERING SOLUTIONS FOR A NEW CENTURY 2000 AMERICAN SOCIETY OF AGRICULTURAL AND BIOLOGICAL, vol. 2, 2000, pages 1151 - 1159

## Description

### TECHNICAL FIELD

This invention relates to a process and plant for the treatment of eggs especially to obtain a mixed product, yolk and albumen, or separate, of high quality, that is to say, having a shelf life comparable to products subjected to rigid pasteurization processes whilst maintaining organoleptic qualities similar to those of a fresh product.

### BACKGROUND ART

In the field of treatment of food products, both the need to obtain a long shelf life and to obtain products with organoleptic properties close to those of the fresh product are strongly felt.

In the field of treatment of eggs, long shelf life is achieved by adjusting the pasteurization parameters.

The pasteurization takes place through the use of particular plate heat exchangers that exchange heat with the liquid product to be pasteurized by convection.

In other words, the product to be pasteurized, be it a mixture of yolk and albumen or pure albumen, is made to touch a hot surface from which it receives the pasteurization heat.

It is known that the pasteurization temperature must be maintained, depending on the product to be pasteurized, in a range substantially between 57°C and 72°C to avoid degrading the product at higher temperatures or to avoid obtaining insufficient pasteurization by using lower temperatures.

The aim of pasteurization is to reduce the bacterial load present in the product to be pasteurized, therefore, together with the temperature, a key parameter of the pasteurization process is the duration of the thermal rest time, that is, the duration of the product being kept at the pasteurization temperature.

**In** accordance with the prior art, within the above-mentioned temperature limits, a longer thermal rest time determines a greater reduction of the bacterial load, therefore, depending on the intended use of the final product, higher pasteurization temperatures are chosen combined with shorter thermal rest times or, vice versa, longer thermal rest times with lower temperatures.

For this reason, where a high organoleptic quality is to be preferred, it is now known to adopt low pasteurization temperatures combined with prolonged thermal rest times.

For example, a traditional pasteurization process of a product with a high microbial load, for example of 1,000,000 CFU/ml, treated at a pasteurization temperature of 64°C with a thermal rest time of 10 min., allows a shelf life of 15 days to be obtained.

In general, the following operations are carried out in a traditional plant:
- receiving eggs of quality "A" or "B" from farms (own or external);
- maintaining egg pallets in refrigerated cells; temperature not lower than 5°C;
- loading eggs into shelling machines equipped with a separation and shelling system, to divide the yolk from the albumen or keep them together;
- transferring the product, which has a temperature of approximately 18°C, by means of trays, to a filtering station;
- filtering the product, to eliminate any shell residues;
- refrigerating the product at approximately 4°C;
- transferring the raw product to refrigerated tanks;
- pasteurizing the product, with thermal rest time at the pasteurization temperature, as discussed above;
- transferring the pasteurized product into refrigerated tanks;
- packaging of the pasteurized product into packs of 1-2 kg, in bag-in-boxes from 2 kg up to 20 kg, or tanks of 1000 litres or tankers, according to the requests of the end customer;
- washing plant with CIP systems. (Clean In Place).

However, these traditional systems do not allow to products to be obtained with long shelf life combined with high organoleptic qualities of the product.

GB 2 265 537 A discloses a method of pasteurizing liquid egg so as to provide an extended refrigerated shelf life comprising electroheating the egg using alternating current.

### SUMMARY OF THE INVENTION

The problem underlying the invention is therefore that of improving the shelf life of a product deriving from shelling of eggs, be it a mixture of egg albumen and yolk or only albumen or only yolk, preserving organoleptic qualities of the product which are significantly comparable with those of the fresh product.

The task of a process and plant for the treatment of eggs according to the invention is therefore to solve this problem.

Within this aim, an object of the invention is to provide a process and a plant for the treatment of eggs which can guarantee a bacterial load of the final product, with the same raw material, which is considerably lower than that obtainable by means of traditional plants and processes.

Within this task, an aim of the invention is to provide a process and a plant for the treatment of eggs which, for the same quality of the final product, allows shorter production times to be obtained with respect to prior art plants and processes.

Another aim of the invention is to provide a process and a plant for the treatment of eggs which is simple to implement and easy to use.

This task, as well as these and other purposes which will appear more clearly below, are achieved by a process and a plant for the treatment of eggs according to the attached independent claims.

Detailed features of a process and a plant for the treatment of eggs according to the invention are indicated in the dependent claims.

Further features and advantages of the invention will emerge more fully from the description of a preferred but not exclusive embodiment of a process and a plant for the treatment of eggs according to the invention, illustrated by way of nonlimiting example in the accompanying drawings, in which:

### BRIEF DESCRIPTION OF THE DRAWINGS

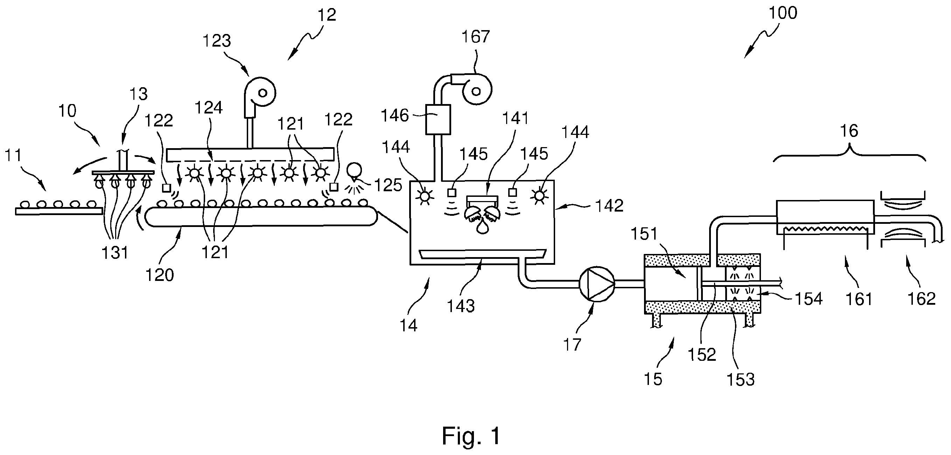

- Figure 1 shows a diagram of an apparatus for treating eggs according to the invention;

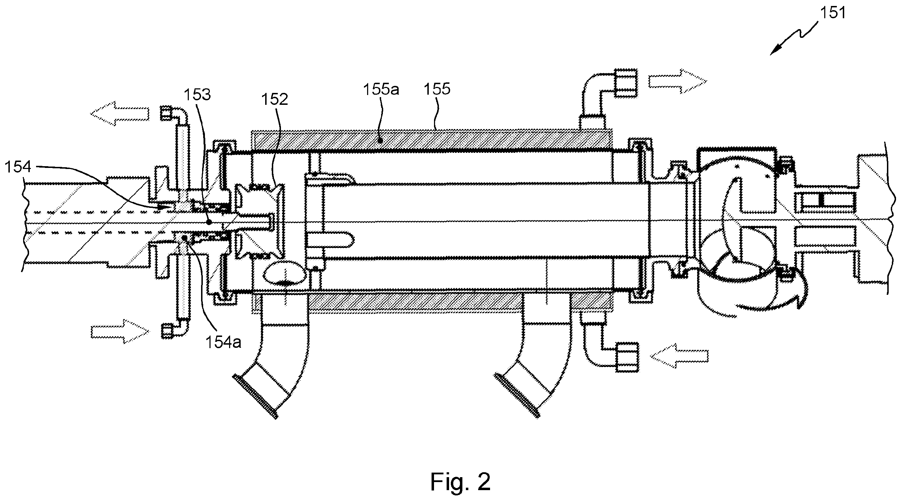

- Figure 2 shows a detail of an apparatus for treating eggs according to the invention, relating to a piston filter, in a meridian section;
- Figure 3 shows a schematic detail in longitudinal section of a detail of an apparatus for treating eggs according to the invention, relating to a shelling station;

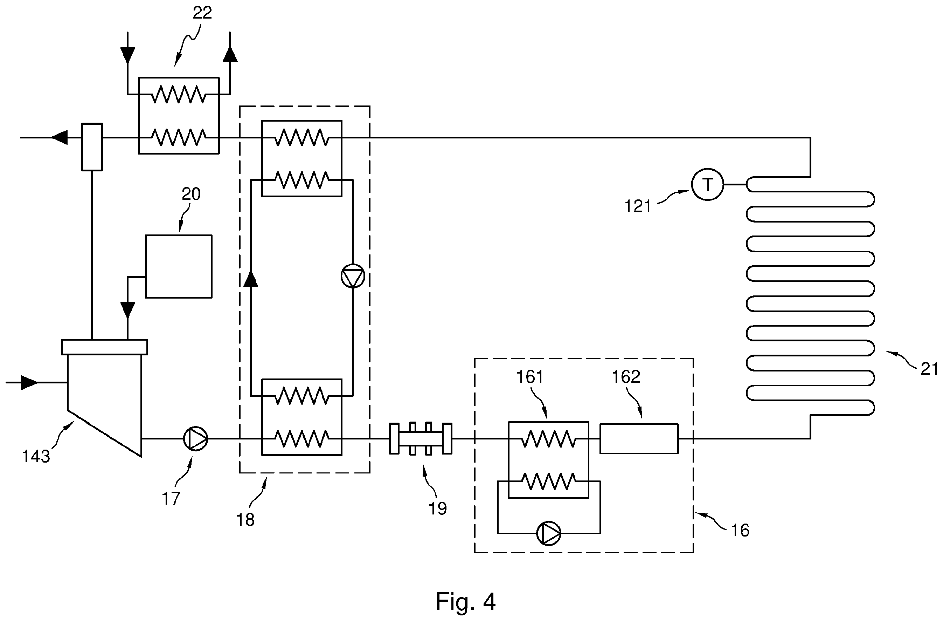

- Figure 4 shows a diagram which exemplifies a portion of an apparatus for treating eggs according to the invention.

### DETAILED DESCRIPTION

With particular reference to the accompanying drawings, the reference number 100 denotes in its entirety an apparatus for treating eggs configured to carry out a process for treating eggs which, according to the invention, can comprise at least one of the following phases:
- a possible loading phase A which can provide for the loading of eggs from a warehouse 11 to a transfer unit 12 for example by means of a manipulator 13 which can be with suction cups 131; this phase A can be carried out cyclically with continuity to ensure a continuous feeding of eggs which are preferably selected exclusively of category A;
- a possible feeding phase B in which the eggs are fed by means of the transfer unit 12 to a shelling station 14 and can be sanitized by irradiation with ultraviolet radiation and/or irradiation with radiofrequency electromagnetic radiation and/or ventilation with a flow of hot air at a temperature not lower than 90°C, preferably not lower than 250°C and preferably not higher than 400°C and, in particular, equal to 375°C and/or spraying with ozonated water spray;
- a shelling phase C in which each egg is shelled by a shelling device 141 in a shelling chamber 142; the phase C can also provide for collecting shelling product in at least one refrigerated tank 143, which is cooled for example by means of a jacket with recirculation of refrigerant, having a temperature not higher than 15°C and preferably between 0°C and 4°C;
- a possible filtering phase D which provides for filtering of the shelling product in a filtering station 15 for example by means of at least one piston filter 151 moved by a stem 153 which is sanitized following each filtering cycle; furthermore, the piston filter 151 is refrigerated at a temperature of between 0°C and 15°C and preferably between 0°C and 4°C;
- a pasteurization phase E which provides for the pasteurization of the shelling product, in a pasteurization station 16, during which the shelling product is irradiated by a radiofrequency electromagnetic emission which can have a frequency between 27.00 MHz and 27.50 MHz and preferably equal to 27.12 MHz, optionally with an electric field having an intensity between 400 V/cm and 5000 V/cm and preferably between 1000 and 2000 V/cm;
- a possible transfer phase F in which the shelling product is transferred from the at least one refrigerated tank 143 to a filtering station 15 and/or from the filtering station 15 to a pasteurization station 16, for example by means of at least one pump 17 which may include or be a flushed pump.

The phase F can provide for the passage of the shelling product into a sealed tank, which can be hermetic except for the inlet and outlet of the shelling product, which is maintained in a condition of overpressure, with respect to atmospheric pressure, by introducing sterile air.

The sealed tank can be placed directly upstream of the pasteurization station 16. A recirculation connection can be hydraulically connected to the sealed tank and configured to operate a recirculation of the contents of the hermetically sealed tank.

This makes it possible to implement a recirculation phase of the shelling product, for example if the pasteurization station 16 is not ready to receive the product to be treated and/or in case of failure or maintenance of the pasteurization station 16.

Moreover, it allows a preparation phase of an appropriate plant washing solution to be implemented.

The phase C, in order to limit or reduce the bacterial load of the shelling product and prevent contamination, provides for irradiating the interior of the shelling chamber 142 with an ultraviolet radiation, for example with a radiation with a power of between 100 and 2500 µW/cm² for a period of time of between 10 and 60 seconds, and/or to maintain the shelling chamber 142 under overpressure by means of an air flow filtered by means of a high-efficiency particulate filter 146 or HEPA filter and/or to sanitize each shelling device 141 following each shelling, for example with a 1.4% hydrogen peroxide aqueous solution.

In this way it is possible to reduce the bacterial load present on the shell of the eggs to be treated so as to greatly reduce the contamination that this bacterial load could carry out with respect to the shelling product, following the shelling itself. Preferably during the phase C the shelling chamber 142 is simultaneously maintained under overpressure by means of a flow of air filtered by said high efficiency particulate filter 146 or HEPA filter and irradiated internally with ultraviolet radiation, for example with a power of between 100 and 2500 µW/cm² for a time of between 10 and 60 seconds, to counteract the bacterial proliferation and, moreover, each shelling device is sanitized, following each shelling, for example by spraying with ozonated water spray or with an aqueous solution of hydrogen peroxide, for example at 1.4%.

Following each phase A, or following a predefined number of phases A, a sanitizing phase A1 is carried out in which the suction cups 131 are sanitized.

It is therefore understood how a process according to the invention guarantees a minimum bacterial contamination and proliferation during the entire treatment of the eggs, from their handling to load them into the apparatus 100 for treating eggs which carries out the phases of the process, up to the unloading of the treated product for its packaging.

Clearly, the packaging will be carried out in the so-called "ultra clean" mode to ensure the minimum risk of contamination and/or proliferation of the bacterial load of the processed product.

Phase E of pasteurization can include:
- heating the shelling product to a pasteurization temperature of between 57°C and 70°C and
- keeping the shelling product at the pasteurization temperature for a thermal rest time of between 2 min. and 5 min.

In detail, the phase E of pasteurization can include in sequence:
- a preheating phase E1 in which the shelling product is heated to a first temperature which is lower than said pasteurization temperature by a difference which is between 2°C and 10°C and which is preferably equal to 8°C for example by means of a traditional heat exchange device, such as a plate exchanger;
- an phase E2 of RF treatment which provides for a heating of the shelling product up to said pasteurization temperature by irradiating said radiofrequency electromagnetic emission.

The Phase E2 can be configured to perform a heating of approximately 6-10°C in a time of between 0.5 s and 1 s.

Depending on the contingent needs of implementation of the process, and on the use of the product to be treated, the pasteurization temperature can be:
- between 60°C and 68°C, and preferably equal to 64°C, with a thermal rest time of between 2 min. and 5 min. and preferably equal to 2 min., if the shelling product is a mixture of yolk and albumen;
- between 55°C and 58°C with a thermal rest time of between 2 min. and 5 min. and preferably equal to 2.5 min., if the shelling product is albumen;
- between 60°C and 68°C with a thermal rest time between 2 and 5 min. and preferably equal to 2.5 min., if said shelling product is yolk.

In the context of the process according to the invention, in order to obtain a longer shelf life, combinations of higher pasteurization temperatures and/or longer thermal rest times will be chosen, although the lowest possible pasteurization temperature and duration of the thermal rest time as short as possible will be adopted to ensure a high level of organoleptic quality of the treated product, that is to say that the characteristics of the latter can be assimilated to a fresh product. The process preferably also comprises a sterilization phase G which provides for a thermal and/or chemical treatment at a temperature not lower than 75°C and/or with a sodium hydroxide solution at least of the shelling device 141 and of the shelling chamber 142.

The phase G may, in particular, comprise one or more of the following treatments of the shelling device 141 and/or of the shelling chamber 142:
- rinsing with water at room temperature for 10-15 minutes;
- spraying with a washing solution of caustic soda (sodium hydroxide) with a concentration not exceeding 2%, at a temperature of 70-80°C (158-176°F) recirculated for 45-60 minutes; during this recirculation the caustic soda is added automatically if the concentration decreases;
- rinsing with water at room temperature for 10-15 minutes;
- disinfecting the system with a solution of ozonated water or a solution of hydrogen peroxide or peracetic or citric or ammonium acid with a concentration of 100-200 ppm at room temperature for 15 minutes leaving it to remain on the surfaces until the next restart.

The process may also include at least one of the following:
- a sanitization phase H, which comprises the introduction of a mixture containing chlorine dioxide into the pasteurization station 16 and/or into a possible homogenization device 19 placed upstream of the pasteurization station 16 and/or into the refrigerated tank 143 and/or into a rest section 21 designed for carrying out a thermal rest time phase of the shelling product following said pasteurization phase E;
- a sterilization phase G, which comprises the introduction of water or an aqueous solution, having a temperature of possibly between 95°C and 135°C, into the pasteurization station 16 and/or into a possible homogenization device 19 placed upstream of the pasteurization station 16 and/or into the refrigerated tank 143 and/or into a rest section 21 designed for carrying out a thermal rest time phase of the shelling product following said pasteurization phase E.

The above-mentioned water can be heated directly by the action of the pasteurization station 16 following injection of an water-based washing liquid. The invention also relates to an apparatus 100 for treating eggs which is configured to carry out a process as disclosed.

The apparatus 100 comprises:
- a possible loading station 10, configured to carry out the phase A, which can comprise a manipulator 13 with suction cups 131 designed for transferring eggs from a warehouse 11 to a transfer unit 12, in a traditional manner;
- a possible transfer unit 12 which for example comprises a roller transfer device 120 of the traditional type and which is configured to carry out the phase B;

- a shelling station 14, configured to carry out the phase C and which comprises a shelling chamber 142, a shelling device 141 housed in the shelling chamber 142 and at least one refrigerated tank 143 for collecting shelling product;
- a possible filtering station 15 configured to carry out the phase D and which can comprise a piston filter 151 which has a filtering member 152 moved, according to alternating motion cycles in a cylinder, by a stem 153 which slides in a seat of the cylinder; the piston filter 151 has means for sanitizing the stem 153 for example at each cycle of said reciprocating motion cycles, for example it can have a chamber 154 crossed by the stem 153 in which a sanitizing liquid 154a flows, for example ozonated water or a solution of hydrogen peroxide;
- a pasteurization station 16, configured to carry out the phase E, which comprises a heat exchanger 161, for example with plates, configured to transfer heat by convection to the shelling product and an emitter device 162 designed to irradiate the shelling product with radiofrequency electromagnetic radiation at a frequency between 27.00 MHz and 27.50 MHz with an electric field of intensity of between 400 V/cm and 5000 V/cm and preferably equal to 27.12 MHz with an electric field of between 1000 and 2000 V/cm;
- a possible transfer device, configured to carry out the phase F and which can comprise at least pump 17, which is preferably a centrifugal and preferably flushed pump, connected to ducts connecting the shelling station, the filtering station 15 and the pasteurization station 16, to transfer the shelled product between them;
- a possible heat recovery device 18 equipped with regenerative exchangers configured to recover heat from the product treated downstream of the pasteurization station 16 to transfer it to the product to be treated upstream of the latter;
- a possible homogenizing device 19, placed upstream of the pasteurization station 16 and configured to homogenize a product passing through it.

The homogenizing device 19 can be an ultrasonic homogenizing device, for example of the tubular reactor type.

The piston filter 151, as mentioned above, can be cooled, for example by being equipped with a jacket 155 defining an interspace crossed by a refrigerating fluid 155a, for example water.

The apparatus 100 may comprise a sealed tank, which may be hermetic except for the inlet and outlet of the shelling product, which may be equipped with an air inlet device configured to keep the sealed tank in an overpressure condition, with respect to the atmospheric pressure.

This sealed tank can be the refrigerated tank 143.

The inlet device can be equipped with means for sterilizing the air to introduce sterilized air into the sealed tank so as to counteract bacterial proliferation in the shelling product which, during operation, passes through the sealed tank.

The sealed tank can be placed directly upstream of the pasteurization station 16 so as to feed shelling product to the pasteurization station 16.

A recirculation connection can be hydraulically connected to the sealed tank and configured to activate a recirculation of the contents of the sealed tank in particular, for example, if the pasteurization station 16 is not ready to receive the product to be treated and/or in case of failure or maintenance of the pasteurization station 16.

An apparatus 100 according to the invention can also comprise a sanitizing device 20 configured to generate chlorine dioxide and incorporated in the apparatus 100 so as to introduce a mixture of air and chlorine dioxide into the path intended for the shelling product to sanitize, in particular, the portion of the apparatus which extends from the refrigerated tank 143.

In particular, the sanitizing device 20 can be connected to the refrigerated tank 143 to introduce chlorine dioxide into the latter during the sanitizing phase H. Thanks to the sanitizing phase G, any biofilms generated on the surfaces of the ducts of the apparatus 100 by microorganisms contained in the shelling product can be eliminated when the apparatus is in operation.

The apparatus 100 can also comprise a rest section 21 located downstream of the pasteurization station 16, and configured to implement a rest phase and control the cooling of the shelling product to a predefined temperature, which can be detected by a temperature sensor 121.

The apparatus 100 can also comprise a heat reduction section 22 configured to reduce the temperature of the shelling product downstream of the pasteurization section 16 and possibly downstream of the rest section 21, for example before the unloading of the pasteurized shelling product from the apparatus 100.

The heat reduction section 22 can comprise a heat exchanger, for example of the liquid-liquid type which can be plate-type, for the exchange of heat between the shelling product and a refrigerated liquid, which can be water or an aqueous solution.

According to the invention, the loading station 10 can comprise means for sanitizing the suction cups 131 of the manipulator 13.

Said means for sanitizing the suction cups 131 may comprise pumping means for injecting a sanitizing solution of ozonated water or a solution of hydrogen peroxide into the vacuum pipe connected to the suction cups, which - for example at regular intervals - inject the sanitizer which thus comes into contact with the suction cups 13, sanitizing them.

The transfer unit 12, according to the invention, can comprise at least one of the following:
- means for sanitizing by irradiation with ultraviolet radiation which, for example, can include lamps 121 designed for emitting ultraviolet radiation, for example with a power between 100 and 2500 µW/cm2 for a time of between 10 and 60 seconds, facing the roller transfer device 120;
- means for sanitizing by irradiation with a radiofrequency electromagnetic radiation, which for example, comprise electromagnetic emitters 122 facing the roller transfer device 120 and configured to emit radiofrequency electromagnetic radiation towards the latter in order to sanitize the eggs it carries;
- means for sanitizing by ventilation with a flow of hot air at a temperature not lower than 90°C, preferably not lower than 250°C and preferably not higher than 400°C, for example by means of a flow of air at 375°C fed for 10 seconds, and which for example comprise a ventilation device 123 provided with outlets 124 facing the roller transfer device 120 and shaped to generate an air blade that laps the eggs placed on the roller transfer device 120;
- means for sanitizing by spraying ozonated water with a spray which can comprise nozzles 125 facing above and/or below the roller transfer device 120 for spraying the eggs which this, in operation, carries.

The shelling station 14 can comprise at least one of the following:
- a high efficiency particulate filter 146, or HEPA filter, and means for forcing air into the shelling chamber 142 through a high efficiency particulate filter 146,
- means for sanitizing each shelling device 141 following each shelling, which may comprise ozonated water ejectors facing the shelling device 141 to spray parts thereof which, in use, come into contact with the shelled product.

The apparatus 100 can comprise a diffuser device 144 connected to the shelling chamber 142 and configured to diffuse a chlorine dioxide solution therein to sanitize it cyclically.

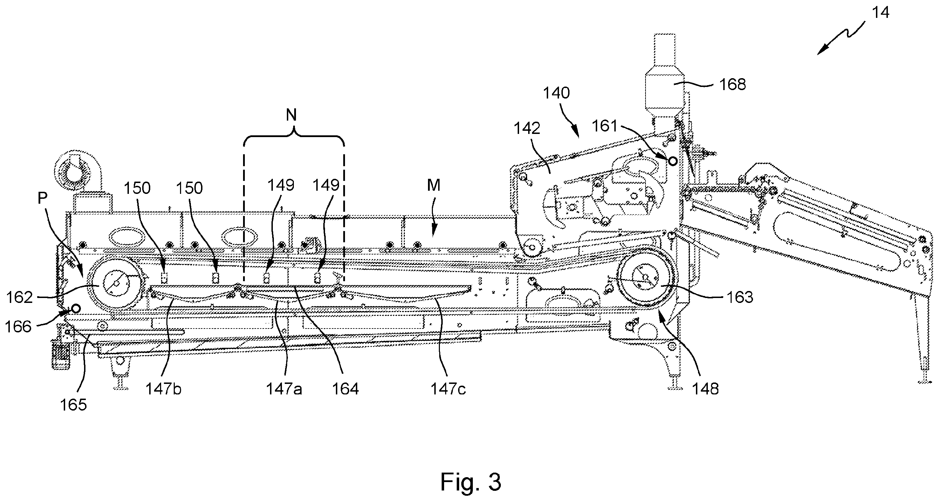

With particular reference to Figure 3, the shelling station 14 can comprise:
- a casing 140 defining a shelling chamber 142 and an unloading compartment B;
- a shelling device 141 housed in the shelling chamber 142 and configured to open egg shells, not shown in Figure 3;
- an unloading device 147 housed in the unloading compartment M and comprising at least one hopper member 147a, 147b, 147c designed to receive and unload a shelling product consisting of albumen, yolk or a mixture of albumen and yolk;
- a transport device 148 which may comprise conveyors configured to separately transport albumen and yolk from the shelling device 141 to the unloading device 147;
- sanitizing devices designed to emit ultraviolet radiation housed in the casing 140 and which comprise a first sanitizing device 149, and possibly a second sanitizing device 150, positioned to irradiate operating surfaces of the hopper member 147a, 147b, to reduce a bacterial load on operating surfaces of the latter, which consist of surfaces that come into contact with yolk and/or albumen during the operation of the apparatus.

The sanitizing devices may comprise one or more ultraviolet lamps which may be tubular and may also comprise a third sanitizing device 161 positioned to irradiate working parts of the shelling device 141 where such working parts comprise parts designed for coming into contact with an egg during operation, to eliminate or reduce any contamination of the shell and therefore of the shelling product, reducing the bacterial load.

The shelling device 141 can comprise at least one opening member, of traditional type and not shown in the enclosed drawings, configured to open an egg shell and cause the yolk and albumen to fall.

Said conveyors of the transport device 148 can comprise, in a traditional and not illustrated manner:
- at least a first conveyor having a plurality of seats each designed to house yolk;
- at least a second conveyor having a plurality of seats each designed to house albumen.

Each opening member can be placed above the first conveyor to discharge a yolk for each seat of the latter.

The first conveyor can be placed above the second conveyor to discharge albumen into the seats of the second conveyor.

The said operating surfaces of the conveyors can comprise said seats which, therefore, are irradiated by ultraviolet radiation during the operation, to reduce any bacterial load present on them.

The first sanitizing device 149 can be positioned in such a way as to irradiate said seats before they are engaged respectively by a yolk and by an albumen, during the operation of the apparatus 100.

In this way, the possibility of contamination, or its extent, of the shelling product received by the shelling device 141 is limited to the full.

The first sanitizing device can be placed side by side with the shelling device 141 and, in particular, it can be placed upstream of the latter with respect to a direction of advancement C of the seats of the conveyors, to sanitize the latter just before being filled.

The conveyors may comprise:
- a plurality of modules, each comprising at least one of the seats, and which can be connected in sequence to form respectively a first chain member and a second chain member, which are closed in a ring;
- a first transmission unit 162 and a second transmission unit 163 to which the chain members are connected and between which the latter extend, defining a forward and a return section of the chain members themselves, which extend from shelling chamber 142 to the unloading compartment M.

The first chain member and the second chain member can constitute a single product, that is, consist of a single chain member.

The ultraviolet lamps of the sanitizing devices can extend transversely to the direction of advancement of the shelling products, defined by the chain members, to irradiate a plurality of adjacent modules which, during operation of the plant, move along the direction of advancement.

The seats of the conveyors can be defined respectively by a first spoon element and a second spoon element, in a traditional manner.

Each module can comprise a first spoon element and a second spoon element which can be reciprocally positioned in such a way that, along the forward section, the first spoon element is positioned above the second spoon element, when the transport device 148 is in use.

The first spoon element can be configured in such a way as to retain a yolk and discharge the albumen of an egg, for example it can have at least one opening or holes positioned and configured to not allow the passage of a whole yolk but to allow the passage of the albumen that surrounds it.

The second spoon element can be configured so as to receive an albumen unloaded from the first spoon element of the same module.

The unloading device 147 can comprise:
- an emptying member operable to interfere with the second conveyor in a first unloading position N of the unloading compartment M;
- a first hopper member 147a of the at least one hopper member 147a, 147b, 147c which is positioned so that, in use, it is under the second conveyor in the first unloading position N to receive the contents of the seats of the second conveyor.

The emptying member can be configured to cause, following its actuation, a fall of the contents of the seats of the second conveyor when these pass through the first unloading position N during the operation of the transport device 148.

For example, the emptying member can be configured to rotate the second spoon in such a way as to cause it to overturn to make its contents fall into the first hopper member.

The emptying member and the conveyors can be of a traditional type and, therefore, not further described or illustrated.

A first filtering device 164 may also be provided, positioned in such a way that in use it is located above the first hopper member 147a to filter and retain egg fragments and allow the passage of the shelling product.

The second sanitizing device 150 can face the first filtering device 164 and/or the first hopper member 147a to reduce any bacterial load present thereon.

The unloading device 147 can comprise a second hopper member 147b and/or a third hopper member 147c which can be housed in the unloading compartment M and positioned with respect to the conveyors so that, when in use, they are under conveyors.

The second sanitizing device 150 can face the second hopper member 147b to sanitize it.

The unloading device 147 can be configured to cause the falling of shelling product from the seats of both the conveyors 16 and 17 into the second hopper member 147b, to simultaneously collect both the yolk and the albumen together. Moreover, the unloading device 147 can be configured to cause the falling of shelling product selectively from specific seats of the conveyors into the third hopper member 147c, to collect waste yolks and/or albumen.

In this case, the selection of said specific seats can be carried out by an operator or by a selection device, possibly equipped with a viewing system facing said seats, which is integrated or connected with the unloading device 147 to operate it so as to unload their contents from said specific seats when such content is identified as to be discarded.

The unloading device 147 can comprise:
- the refrigerated tank 143 positioned in the unloading compartment M in such a way that in use it is under the first conveyor to receive the shelling product from the latter;
- a refrigeration device, not shown, thermally connected to the refrigerated tank 143 to cool it to a temperature not higher than 15°C and preferably between 0°C and 4°C, for example by means of a jacket with recirculation of refrigerant associated with the refrigerated tank 143. The apparatus 100 can be configured to unload the shelling product from the first conveyor into a second unloading position P of the unloading compartment M.

The apparatus 100 can comprise a second filtering device 165 positioned in such a way as to receive shelling product from the first conveyor unloaded in the second unloading position P, to filter and retain egg fragments and allow the passage of the shelling product.

The apparatus 100 can comprise a fourth sanitizing device 166, of said sanitizing devices, which can face the second filtering device 165 to reduce any bacterial load present on it.

The first filtering device 164 and/or the second filtering device 165, respectively, can comprise a mesh or perforated conveyor belt which can be operated to drag, in an ejection direction, fragments of filtered egg.

The ejection direction H of the first filtering device 164 can be transversal and preferably perpendicular to the direction of advancement.

The ejection direction of the second filtering device 165 can be parallel to the direction of advancement where the second unloading position P is located at one end of the transport device 148 distal to the shelling device 141.

The apparatus 100 may comprise ventilation means which are in aeraulic communication with the interior of the casing 140 to force a flow of gas into the latter.

These ventilation means may comprise or consist of one or more fans 167.

Said gas is optionally filtered air or a gaseous mixture containing ozone.

Said filtered air can preferably consist of a flow of air filtered by means of a HEPA filter 146 which can be fixed to the fans 167 to be crossed by the flow of air forced by the latter.

The apparatus 100 can comprise a suction unit 168 which is in aeraulic connection with the interior of the casing 140 and is configured to suck a gas contained in the latter.

In particular, the apparatus 100 is preferably configured to operate the ventilation means and/or the suction unit 168 in such a way that the inside of the casing 140 is in depression with respect to the relative environment outside if the gas introduced by the ventilation means in the casing 140 includes ozone.

The ultraviolet lamps of the first sanitizing device 149 and of the second sanitizing device 150 are preferably placed above the sides of the first hopper member 147a and of the second hopper member 147b respectively, for example in such a way that these lamps are spaced along the direction of advancement C so as to leave a free space between them for the falling of shelling product into the first and second hopper members 147a, 147b.

The apparatus 100 can also comprise a sterilization device 145 configured to sterilize the shelling device 141 at a temperature between 70°C and 80°C and preferably equal to 75°C.

The apparatus 100 can also comprise a packaging station, of a traditional type and illustrated in the accompanying drawings.

For example, the packaging station can be based on a technology known in the jargon as Ultraclean where a tank of cartons is provided to contain the product which are already punched and ready for use.

The single carton is loaded into the machine, formed and sealed. Then it is filled and closed.

A packaging station of this type works with a slight overpressure achieved by means of filtered air, for example by a HEPA filter, which allows contamination from the outside to be reduced.

Alternatively, the packaging station may be based on a technology known in the jargon as aseptic where the station is provided with a reel of polylaminate to form the cartons, a forming device which forms and seals the cartons, a sterilization device which treats the cartons, generally with hydrogen peroxide, before being fed to a filling unit which is isolated from the outside and works in slight overpressure by means of a sterile air supply.

It is therefore understood how a process and an apparatus for treating eggs according to the invention allow the shelf life of a product deriving from the shelling of eggs to be improved, be it a mixture of albumen and yolk or only albumen or only yolk, while maintaining the organoleptic properties of the product which are significantly comparable with those of the fresh product.

In particular, a process or apparatus for treating eggs according to the invention makes it possible to guarantee a bacterial load of the final product, with the same raw material, which is significantly lower than that obtainable by means of prior art systems and processes.

Furthermore, it allows, with the same final product quality, to keep the plant in production for considerably longer times than traditional plants and processes which, on the other hand, require stoppages for much more frequent cleaning operations.

For example, tests carried out by the Applicant in the preparation of a mixed product intended for making sponge cake, gave the following results.

In these tests, the rheological properties of the initial batter were analysed as it reveals the quality of the cake and, subsequently, the final baked product.

The tests obtained with the fresh unpasteurized product gave optimal results which were kept as references.

In a first test an egg mixture was treated which was pasteurized at 60°C with a thermal rest time of 2 min.

This treatment caused a change in viscosity in the treated product, compared to the fresh one, but nevertheless obtaining a soft and smooth final sponge cake, very similar to that made with unpasteurized product.

In a second test the pasteurization took place at 64°C with a thermal rest time of 2 minutes which in any case led to a final product, after cooking, similar to one obtained with a fresh mix, that is, untreated.

In a third test a pasteurization was carried out at 68°C with a thermal rest time of 5 min. which caused an increase in the viscosity of the batter and a decrease in the porosity of the final product after cooking, thus obtaining a not very soft and not very smooth sponge cake.

Thanks to the process and apparatus according to the invention, as it possible to obtain an effective pasteurization of the egg mixture already at 60°C - 64°C with a thermal rest time of only 2 minutes, it is therefore possible to provide a treated product which allows a sponge cake to be obtained of a quality which is significantly comparable to that which can be obtained through the use of fresh product.

As regards the improvement of the shelf life of the treated product by means of a process and apparatus according to the invention, tests carried out by the Applicant have led to the following results.

The tests have shown that starting from eggs with a very high microbial load, of the order of 1,000,000 CFU/ml, and pasteurizing, in accordance with the process according to the invention, by preheating to a preheating temperature of 62°C and subsequently bringing the shelling product to a pasteurization temperature of 67°C by radiofrequency radiation, with 0.5 seconds to reach the pasteurization temperature, and with a thermal rest time of 210 seconds, a shelf life of 45 days was reached compared with the 15 days obtained using a traditional system with pasteurization at 64°C with a thermal rest time of 10 minutes.

The result of this test demonstrated a better bacterial reduction and a qualitatively better final product compared to traditional pasteurization.

In a second test, starting from a product with an excellent quality, that is, with a microbial load of the raw product of approximately 100,000 CFU/ml, a traditional process with pasteurization at 68°C and a thermal rest time of 150 seconds obtained a shelf-life of 45 days compared with a shelf life of 90 days and a more homogeneous pasteurization, with quality similar to that obtained by the traditional process, obtained by a process according to the invention by means of a pasteurization with preheating at 62°C and radiofrequency heating at the pasteurization temperature of 68°C, with a thermal rest time again of 150 seconds.

The invention thus conceived is susceptible to numerous modifications and variations, all of which fall within the scope of protection of the attached claims. Further, all details may be replaced by other technically equivalent elements. Where the operating and technical features mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

## Claims

1. Process for treating eggs which includes:
- a shelling phase C in which each egg is shelled by a shelling device (141) in a shelling chamber (142); said phase C providing to irradiate the interior of said shelling chamber (142) with an ultraviolet radiation and/or to maintain said shelling chamber (142) under over-pressure by means of an air flow filtered by means of an high efficiency particulate filter (146) or **HEPA** filter and/or to sanitize each shelling device (141) following each shelling; said step C providing for collecting shelling product in at least one refrigerated tank (143) having a temperature not higher than 15° C;
- a pasteurization phase E which provides for a pasteurization of said shelling product during which the latter is irradiated by a radio frequency electromagnetic emission having a frequency between 27.00 MHz and 27.50 MHz with an electric field of intensity included between 400 V/cm and 5000 V/cm.

2. Process according to claim 1 which comprises at least one further phase between:
- a loading phase A which provides for the loading of eggs from a warehouse (11) to a transfer unit (12) by means of a manipulator with suction cups (13);
- a feeding phase B in which said eggs are fed by means of said transfer unit (12) to a shelling station (14) and are sanitized by irradiation with ultraviolet radiation and/or irradiation with radio frequency electromagnetic radiation and/or ventilation a flow of hot air at a temperature not lower than 90° C and/or spraying with ozonated water spray;
- a filtering phase D which provides for a filtering of said shelling product in a filtering station (15) by means of at least one piston filter (151) wherein a stem (153) of said piston filter (151) is sanitized following of each filtering cycle; said piston filter (151) being refrigerated at a temperature comprised between 0° C and 4° C;
- a transfer phase F in which said shelling product is transferred from said at least one refrigerated tank (143) to a filtering station (15) and/or from said filtering station (15) to a pasteurization station (16), by means of at least one pump (17);
wherein following each phase A, or following a predefined number of phases A, a sanitization phase A1 is carried out in which said suction cups (131) are sanitized;
- a sanitization phase **H,** which provides for the introduction of a mixture containing chlorine dioxide into a pasteurization station (16) suitable for carrying out said pasteurization phase E and/or in a homogenization device (19) arranged upstream of said pasteurization station (16) and/or in said refrigerated tank (143) and/or in a rest station (21) suitable for carrying out a thermal rest phase of the shelling product following said pasteurization phase E;
- a sterilization phase G, which provides for the introduction of superheated water, possibly having a temperature between 95° C and 135° C, in a pasteurization station (16) suitable for carrying out said pasteurization phase E and/or in a homogenization device (19) arranged upstream of said pasteurization station (16) and/or in said refrigerated tank (143) and/or in a rest station (21) suitable for carrying out a thermal rest phase of the product to be shelling following said phase E of pasteurization.

3. Process according to claim 1 or 2 wherein said pasteurization phase E provides of
- heating said shelling product to a pasteurization temperature between 57° C and 70° C and of
- keeping said shelling product at said pasteurization temperature for a thermal rest time comprised between 2 min. and 5 min..

4. Process according to one of the preceding claims wherein said pasteurization phase E provides in sequence:
- a preheating phase E1 in which said shelling product is heated to a first temperature which is lower than said pasteurization temperature by a difference which is between 2° C and 10° C and which is preferably equal to 8° C;
- an RF treatment phase E2 which provides for a heating of said shelling product up to said pasteurization temperature by irradiation of said radio frequency electromagnetic emission.

5. Process according to one of claims 3 and 4 wherein said pasteurization temperature is:
- between 60° C and 68° C, and preferably equal to 64° C, with a thermal rest time comprised between 2 min. and 5 min. and preferably equal to 2 min., if said shelling product is a mixture of yolk and albumen;
- between 55° C and 63° C with a thermal rest time between 2 min. and 5 min. and preferably equal to 2.5 min., if said shelling product is albumen;
- between 60° C and 68° C with a thermal rest time between 2 and 5 min. and preferably equal to 2.5 min., if said shelling product is yolk.

6. Process according to claim 2 and one of the preceding claims wherein said at least one pump (17) used in said transfer phase F comprises or is a flow pump.

7. Process according to one of the preceding claims which comprises a sterilization phase G which provides for a thermal and/or chemical treatment at a temperature not lower than 75° C and/or with a sodium hydroxide solution, respectively, at least of said shelling device (141) and said shelling chamber (142).

8. Egg processing apparatus which is configured to carry out a process according to one of the preceding claims, wherein the apparatus comprises:
- a shelling station (14), configured to carry out said phase C, which comprises a shelling chamber (142), a shelling device (141) housed in said shelling chamber (142) and a high efficiency particulate filter (146), or HEPA filter, and means for forcing air into said shelling chamber (142) through said HEPA filter, and/or means for sanitizing each shelling device (141) following each shelling and at least one refrigerated tank (143) to collect shelling product;
- a pasteurization device (16), configured to carry out said phase E, comprising a heat exchanger (161) configured to transfer heat by convection to said shelling product and an emitting device (162) adapted to irradiate said shelling product with electromagnetic radiation in radiofrequency at a frequency between 27.00 MHz and 27.50 MHz with an electric field of intensity between 400 V/cm and 5000 V/cm.

9. Apparatus according to claim 8, wherein the apparatus comprises at least one of:
- a loading station (10), configured to carry out said phase A, which comprises a manipulator with suction cup (13) and means for sanitizing suction cups (131) of said manipulator with suction cup (13);
- a transfer unit (12), configured to carry out said phase B, which comprises means for sanitizing by irradiation with ultraviolet radiation and/or means for sanitizing by irradiation with radio frequency electromagnetic radiation and/or means for sanitizing by ventilation with a flow of hot air at a temperature not lower than 90° C and/or means for sanitizing by spraying with ozonated water spray;
- a filtering station (15) configured to perform said phase D and comprising a piston filter (151) which has a filtering member moved, according to alternating motion cycles in a cylinder, by a stem (153) which slides in a seat of said cylinder, said piston filter (151) having means for sanitizing said stem (153) at each cycle of said reciprocating motion cycles;
- a transfer device, configured to carry out said step F and comprising a pump (17);
- a sanitizing device (20) configured to generate chlorine dioxide and incorporated in the apparatus (100) so as to introduce a mixture of containing chlorine dioxide into at least a portion of said apparatus (100) which extends from said refrigerated tank (143).
- a rest section (21) located downstream of said pasteurization station (16), configured to implement a thermal rest phase and controlling a cooling of the shelling product up to a predefined temperature.

10. Apparatus according to one of claims 8 to 9 which comprises a diffuser device connected to said shelling chamber (142) and configured to diffuse a chlorine dioxide solution into the latter.

11. Apparatus according to one of claims 8 to 10 comprising a sterilization device configured to sterilize said shelling device (141) at a temperature between 70° C and 80° C and preferably equal to 75° C.

## Patentansprüche

1. Verfahren zur Behandlung von Eiern, das Folgendes umfasst:
- eine Schälphase C, in der jedes Ei von einer Schälvorrichtung (141) in einer Schälkammer (142) geschält wird; wobei die Phase C dafür sorgt, das Innere der besagten Schälkammer (142) mit einer ultravioletten Strahlung zu bestrahlen und/oder die Schälkammer (142) mittels eines Luftstroms, der mittels eines hochwirksamen Partikelfilters (146) oder HEPA-Filters gefiltert wird, unter Überdruck zu halten und/oder jede Schälvorrichtung (141) nach jedem Schälen zu desinfizieren; wobei der Schritt C das Sammeln des Schalenprodukts in mindestens einem Kühltank (143) mit einer Temperatur von nicht mehr als 15° C vorsieht;
- eine Pasteurisierungsphase E, die eine Pasteurisierung des genannten Schalenprodukts vorsieht, während der letzteres mit einer elektromagnetischen Hochfrequenzstrahlung mit einer Frequenz zwischen 27,00 MHz und 27,50 MHz mit einem elektrischen Feld mit einer Intensität zwischen 400 V/cm und 5000 V/cm bestrahlt wird.

2. Verfahren nach Anspruch 1, das mindestens eine weitere Phase dazwischen umfasst:
- eine Ladephase A, die das Laden von Eiern aus einem Lager (11) in eine Transfereinheit (12) mittels eines Manipulators mit Saugnäpfen (13) ermöglicht;
- eine Zuführphase B, in der die Eier mittels der Transfereinheit (12) einer Schälstation (14) zugeführt und durch Bestrahlung mit ultravioletter Strahlung und/oder Bestrahlung mit elektromagnetischer Hochfrequenzstrahlung und/oder Belüftung mit einem Heißluftstrom bei einer Temperatur von nicht weniger als 90° C und/oder Besprühen mit ozonisiertem Wasserspray desinfiziert werden;
- eine Filtrierphase D, die ein Filtrieren des Schalenprodukts in einer Filtrierstation (15) mittels mindestens eines Kolbenfilters (151) vorsieht, wobei ein Schaft (153) des Kolbenfilters (151) nach jedem Filtrierzyklus desinfiziert wird; wobei der Kolbenfilter (151) bei einer Temperatur zwischen 0° C und 4° C gekühlt wird;
- eine Transferphase F, in der das Schalenprodukt von dem mindestens einen Kühltank (143) zu einer Filtrierstation (15) und/oder von der Filtrierstation (15) zu einer Pasteurisierungsstation (16) mittels mindestens einer Pumpe (17) transferiert wird;
wobei nach jeder Phase A oder nach einer vordefinierten Anzahl von Phasen A eine Desinfektionsphase A1 durchgeführt wird, in der die Saugnäpfe (131) desinfiziert werden;
- eine Desinfektionsphase H, die das Einbringen einer Chlordioxid enthaltenden Mischung in eine Pasteurisierungsstation (16), die zur Durchführung der Pasteurisierungsphase E geeignet ist, und/oder in eine Homogenisierungsvorrichtung (19), die der Pasteurisierungsstation (16) vorgeschaltet ist, und/oder in den Kühltank (143) und/oder in eine Ruhestation (21), die zur Durchführung einer thermischen Ruhephase des Schalenprodukts nach der Pasteurisierungsphase E geeignet ist, vorsieht;
- eine Sterilisierungsphase G, die die Einleitung von überhitztem Wasser, gegebenenfalls mit einer Temperatur zwischen 95° C und 135° C in einer Pasteurisierungsstation (16), die zur Durchführung der Pasteurisierungsphase E geeignet ist, und/oder in einer Homogenisierungsvorrichtung (19), die der Pasteurisierungsstation (16) vorgeschaltet ist, und/oder in dem Kühltank (143) und/oder in einer Ruhestation (21), die zur Durchführung einer thermischen Ruhephase des zu schälenden Produkts nach der Pasteurisierungsphase E geeignet ist, vorsieht.

3. Verfahren nach Anspruch 1 oder 2, wobei die Pasteurisierungsphase E
- das Erhitzen des Schalenprodukts auf eine Pasteurisierungstemperatur zwischen 57° C und 70° C und
- das Halten des Schalenprodukts bei der besagten Pasteurisierungstemperatur für eine thermische Ruhezeit zwischen 2 min. und 5 min. vorsieht.

4. Verfahren nach einem der vorhergehenden Ansprüche, bei dem die Pasteurisierungsphase E folgende aufeinanderfolgende Schritte vorsieht:
- eine Vorwärmphase E1, in der das Schalenprodukt auf eine erste Temperatur erwärmt wird, die um eine Differenz zwischen 2° C und 10° C unter der besagten Pasteurisierungstemperatur liegt und vorzugsweise gleich 8° C ist;
- eine RF-Behandlungsphase E2, die eine Erwärmung des Schalenprodukts auf die besagte Pasteurisierungstemperatur durch Bestrahlung mit der elektromagnetischen Radiofrequenzstrahlung vorsieht.

5. Verfahren nach einem der Ansprüche 3 und 4, wobei die Pasteurisierungstemperatur beträgt:
- zwischen 60° C und 68° C, vorzugsweise gleich 64° C, mit einer thermischen Ruhezeit zwischen 2 min. und 5 min. und vorzugsweise gleich 2 min., wenn das Schalenprodukt eine Mischung aus Eigelb und Eiweiß ist;
- zwischen 55° C und 63° C mit einer thermischen Ruhezeit zwischen 2 min. und 5 min. und vorzugsweise gleich 2,5 min., wenn das Schalenprodukt Eiweiß ist;
- zwischen 60° C und 68° C mit einer thermischen Ruhezeit zwischen 2 und 5 Minuten und vorzugsweise gleich 2,5 min., wenn das Schalenprodukt Eigelb ist.

6. Verfahren nach Anspruch 2 und einem der vorhergehenden Ansprüche, wobei die mindestens eine in der Transferphase F verwendete Pumpe (17) eine Strömungspumpe umfasst oder eine solche ist.

7. Verfahren nach einem der vorhergehenden Ansprüche, das eine Sterilisierungsphase G umfasst, die eine thermische und/oder chemische Behandlung bei einer Temperatur von nicht weniger als 75° C und/oder mit einer Natriumhydroxidlösung zumindest der Schälvorrichtung (141) und der Schälkammer (142) vorsieht.

8. Vorrichtung zur Verarbeitung von Eiern, die so konfiguriert ist, dass sie ein Verfahren nach einem der vorhergehenden Ansprüche durchführt, wobei die Vorrichtung Folgendes umfasst:
- eine Schälstation (14), die so konfiguriert ist, dass sie die Phase C durchführt, und die eine Schälkammer (142), eine Schälvorrichtung (141), die in der Schälkammer (142) untergebracht ist, und einen hochwirksamen Partikelfilter (146) oder HEPA-Filter sowie Mittel zum Einleiten von Luft in die Schälkammer (142) durch den besagten HEPA-Filter und/oder Mittel zum Desinfizieren jeder Schälvorrichtung (141) nach jedem Schälen und mindestens einen Kühltank (143) zum Sammeln des Schalenprodukts umfasst;
- eine Pasteurisierungsvorrichtung (16), die so konfiguriert ist, dass sie die Phase E ausführt, welche einen Wärmetauscher (161), der so konfiguriert ist, dass er Wärme durch Konvektion auf das Schalenprodukt überträgt, und eine Sendevorrichtung (162), die so angepasst ist, dass sie das Schalenprodukt mit elektromagnetischer Strahlung im Hochfrequenzbereich bei einer Frequenz zwischen 27,00 MHz und 27,50 MHz mit einem elektrischen Feld einer Intensität zwischen 400 V/cm und 5000 V/cm bestrahlt, umfasst.

9. Vorrichtung nach Anspruch 8, wobei die Vorrichtung mindestens eines der folgenden Elemente umfasst:
- eine Ladestation (10), die so konfiguriert ist, dass sie die Phase A ausführt, und die einen Manipulator mit Saugnapf (13) und Mittel zum Desinfizieren der Saugnäpfe (131) des Manipulators mit Saugnapf (13) umfasst;
- eine Transfereinheit (12), die so konfiguriert ist, dass sie die Phase B ausführt, die Mittel zur Desinfektion durch Bestrahlung mit ultravioletter Strahlung und/oder Mittel zur Desinfektion durch Bestrahlung mit elektromagnetischer Hochfrequenzstrahlung und/oder Mittel zur Desinfektion durch Belüftung mit einem Heißluftstrom bei einer Temperatur von nicht weniger als 90° C und/oder Mittel zur Desinfektion durch Besprühen mit ozonisiertem Wasserspray umfasst;
- eine Filtrierstation (15), die so konfiguriert ist, dass sie die Phase D durchführt, und die einen Kolbenfilter (151) umfasst, der ein Filterelement aufweist, das gemäß abwechselnden Bewegungszyklen in einem Zylinder durch einen Schaft (153) bewegt wird, der in einem Sitz des Zylinders gleitet, wobei der Kolbenfilter (151) Mittel zum Reinigen des Schafts (153) bei jedem Zyklus der hin- und hergehenden Bewegungszyklen aufweist;
- eine Transfervorrichtung, die zur Durchführung des Schritts F konfiguriert ist und eine Pumpe (17) umfasst;
- eine Desinfektionsvorrichtung (20), die so konfiguriert ist, dass sie Chlordioxid erzeugt, und die in die Vorrichtung (100) eingebaut ist, um ein Gemisch, das Chlordioxid enthält, in mindestens einen Teil der Vorrichtung (100) einzuführen, der sich von dem Kühltank (143) erstreckt.
- einen Ruheabschnitt (21), der sich stromabwärts der Pasteurisierungsstation (16) befindet und so konfiguriert ist, dass er eine thermische Ruhephase einleitet und eine Abkühlung des Schalenprodukts bis zu einer vordefinierten Temperatur steuert.

10. Vorrichtung nach einem der Ansprüche 8 bis 9, die eine Diffusorvorrichtung umfasst, die mit der Schälkammer (142) verbunden und so konfiguriert ist, dass sie eine Chlordioxidlösung in letztere diffundiert.

11. Vorrichtung nach einem der Ansprüche 8 bis 10, die eine Sterilisationsvorrichtung umfasst, die so konfiguriert ist, dass sie die Schälvorrichtung (141) bei einer Temperatur zwischen 70° C und 80° C und vorzugsweise bei 75° C sterilisiert.

## Revendications

1. Procédé de traitement d'œufs qui comporte :
- une phase de décorticage C lors de laquelle chaque œuf est décortiqué par un dispositif de décorticage (141) dans une chambre de décorticage (142) ; ladite phase C prévoyant d'irradier l'intérieur de ladite chambre de décorticage (142) avec un rayonnement ultraviolet et/ou de maintenir ladite chambre de décorticage (142) à une surpression à l'aide d'un flux d'air filtré au moyen d'un filtre à particules à haute efficacité (146) ou d'un filtre HEPA et/ou de désinfecter chaque dispositif de décorticage (141) après chaque décorticage ; ladite étape C prévoyant de collecter le produit de décorticage dans au moins une cuve réfrigérée (143) ayant une température non supérieure à 15°C ;
- une phase de pasteurisation E qui prévoit une pasteurisation dudit produit de décorticage pendant laquelle ce dernier est irradié par une émission électromagnétique radiofréquence ayant une fréquence comprise entre 27,00 MHz et 27,50 MHz avec un champ électrique d'une intensité comprise entre 400 V/cm et 5000 V/cm.

2. Procédé selon la revendication 1, qui comprend au moins une autre phase entre :
- une phase de chargement A qui prévoit le chargement d'œufs depuis un lieu de stockage (11) vers une unité de transfert (12) au moyen d'un manipulateur avec des ventouses (13) ;
- une phase d'alimentation B lors de laquelle lesdits œufs sont fournis au moyen de ladite unité de transfert (12) à un poste de décorticage (14) et sont désinfectés par irradiation avec un rayonnement ultraviolet et/ou irradiation avec un rayonnement électromagnétique radiofréquence et/ou ventilation d'un flux d'air chaud à une température non inférieure à 90°C et/ou pulvérisation avec un jet d'eau ozonée ;
- une phase de filtrage D qui prévoit un filtrage dudit produit de décorticage dans un poste de filtrage (15) au moyen d'au moins un filtre à piston (151) dans lequel une tige (153) dudit filtre à piston (151) est désinfectée après chaque cycle de filtrage, ledit filtre à piston (151) étant réfrigéré à une température comprise entre 0°C et 4°C ;
- une phase de transfert F lors de laquelle ledit produit de décorticage est transféré de ladite au moins une cuve réfrigérée (143) vers un poste de filtrage (15) et/ou dudit poste de filtrage (15) vers un poste de pasteurisation (16), au moyen d'au moins une pompe (17) ;
dans lequel, après chaque phase A, ou après un nombre prédéfini de phases A, une phase de désinfection A1 est exécutée, lors de laquelle lesdites ventouses (131) sont désinfectées ;
- une phase de désinfection H, qui prévoit l'introduction d'un mélange qui contient du dioxyde de chlore dans un poste de pasteurisation (16) adapté pour exécuter ladite phase de pasteurisation E et/ou dans un dispositif d'homogénéisation (19) prévu en amont dudit poste de pasteurisation (16) et/ou dans ladite cuve réfrigérée (143) et/ou dans un poste de repos (21) adapté pour exécuter une phase de repos thermique du produit de décorticage après ladite phase de pasteurisation E ;
- une phase de stérilisation G, qui prévoit l'introduction d'eau surchauffée, présentant possiblement une température comprise entre 95°C et 135°C, dans un poste de pasteurisation (16) adapté pour exécuter ladite phase de pasteurisation E et/ou dans un dispositif d'homogénéisation (19) prévu en amont dudit poste de pasteurisation (16) et/ou dans ladite cuve réfrigérée (143) et/ou dans un poste de repos (21) adapté pour exécuter une phase de repos thermique du produit à décortiquer après ladite phase E de pasteurisation.

3. Procédé selon la revendication 1 ou 2, dans lequel ladite phase de pasteurisation E prévoit
- le chauffage dudit produit de décorticage à une température de pasteurisation comprise entre 57°C et 70°C, et
- le maintien duit produit de décorticage à ladite température de pasteurisation pendant un temps de repos thermique compris entre 2 minutes et 5 minutes.

4. Procédé selon l'une des revendications précédentes, dans lequel ladite phase de pasteurisation E prévoit, dans cet ordre :
- une phase de préchauffage E1 lors de laquelle ledit produit de décorticage est chauffé à une première température qui est inférieure à ladite température de pasteurisation selon une différence qui est comprise entre 2°C et 10°C, et qui est de préférence égale à 8°C ;
- une phase de traitement RF E2 qui prévoit un chauffage dudit produit de décorticage jusqu'à ladite température de pasteurisation par irradiation de ladite émission électromagnétique radiofréquence.

5. Procédé selon l'une des revendications 3 et 4, dans lequel ladite température de pasteurisation est :
- comprise entre 60°C et 68°C, et est de préférence égale à 64°C, avec un temps de repos thermique compris entre 2 minutes et 5 minutes, et de préférence égal à 2 minutes, si ledit produit de décorticage est un mélange de jaune d'œuf et d'albumine ;
- comprise entre 55°C et 63°C avec un temps de repos thermique compris entre 2 minutes et 5 minutes et de préférence égal à 2,5 minutes, si ledit produit de décorticage est de l'albumine ;
- comprise entre 60°C et 68°C avec un temps de repos thermique compris entre 2 et 5 minutes et de préférence égal à 2,5 minutes, si ledit produit de décorticage est du jaune d'œuf.

6. Procédé selon la revendication 2 et l'une des revendications précédentes, dans lequel ladite au moins une pompe (17) utilisée lors de ladite phase de transfert F comprend ou est une pompe à débit.

7. Procédé selon l'une des revendications précédentes qui comprend une phase de stérilisation G qui prévoit un traitement thermique et/ou chimique à une température non inférieure à 75°C et/ou avec une solution d'hydroxyde de sodium, respectivement, au moins dudit dispositif de décorticage (141) et de ladite chambre de décorticage (142).

8. Appareil de traitement d'œufs qui est configuré pour exécuter un procédé selon l'une des revendications précédentes, dans lequel l'appareil comprend :
- un poste de décorticage (14), configuré pour exécuter ladite phase C, qui comprend une chambre de décorticage (142), un dispositif de décorticage (141) contenu dans ladite chambre de décorticage (142) et un filtre à particules à haute efficacité (146), ou un filtre HEPA, et un moyen destiné à forcer l'introduction d'air dans ladite chambre de décorticage (142) par le biais dudit filtre HEPA, et/ou un moyen destiné à désinfecter chaque dispositif de décorticage (141) après chaque décorticage et au moins une cuve réfrigérée (143) destinée à collecter le produit de décorticage ;
- un dispositif de pasteurisation (16), configuré pour exécuter ladite phase E, comprenant un échangeur de chaleur (161) configuré pour transférer la chaleur par convection vers ledit produit de décorticage et un dispositif d'émission (162) adapté pour irradier ledit produit de décorticage avec un rayonnement électromagnétique en radiofréquence à une fréquence comprise entre 27,00 MHz et 27,50 MHz avec un champ électrique d'une intensité comprise entre 400 V/cm et 5000 V/cm.

9. Appareil selon la revendication 8, dans lequel l'appareil comprend au moins l'un de :
- un poste de chargement (10), configuré pour exécuter ladite phase A, qui comprend un manipulateur avec une ventouse (13) et un moyen destiné à désinfecter les ventouses (131) dudit manipulateur avec une ventouse (13) ;
- une unité de transfert (12), configurée pour exécuter ladite phase B, qui comprend un moyen destiné à désinfecter par irradiation avec un rayonnement ultraviolet et/ou un moyen destiné à désinfecter par irradiation avec un rayonnement électromagnétique radiofréquence et/ou un moyen destiné à désinfecter par ventilation avec un flux d'air chaud à une température non inférieure à 90°C et/ou un moyen destiné à désinfecter par pulvérisation avec un jet d'eau ozonée ;
- un poste de filtrage (15) configuré pour exécuter ladite phase D et comprenant un filtre à piston (151) qui possède un élément de filtrage déplacé, selon des cycles de déplacements alternés dans un cylindre, par une tige (153) qui coulisse dans un siège dudit cylindre, ledit filtre à piston (151) ayant un moyen destiné à désinfecter ladite tige (153) lors de chaque cycle desdits cycles de déplacements alternés ;
- un dispositif de transfert, configuré pour exécuter ladite étape F et comprenant une pompe (17) ;
- un dispositif de désinfection (20) configuré pour générer du dioxyde de chlore et intégré à l'appareil (100) de façon à introduire un mélange qui contient du dioxyde de chlore dans au moins une partie dudit appareil (100) qui s'étend depuis ladite cuve réfrigérée (143) ;
- une section de repos (21) située en aval dudit poste de pasteurisation (16), configurée pour mettre en œuvre une phase de repos thermique et qui contrôle un refroidissement du produit de décorticage jusqu'à une température prédéfinie.

10. Appareil selon l'une des revendications 8 à 9 qui comprend un dispositif de diffusion relié à ladite chambre de décorticage (142) et configuré pour diffuser une solution de dioxyde de chlore dans cette dernière.

11. Appareil selon l'une des revendications 8 à 10 comprenant un dispositif de stérilisation configuré pour stériliser ledit dispositif de décorticage (141) à une température comprise entre 70°C et 80°C et de préférence égale à 75°C.
